# EUROPÄISCHE PATENTSCHRIFT

(11) **EP 4 585 308 B1**
(45) Veröffentlichungstag und Bekanntmachung des Hinweises auf die Patenterteilung: **21.10.2026**
(21) Anmeldenummer: 25000002.3
(22) Anmeldetag: 10.01.2025
(51) Int. Cl.: B02C 18/00, B02C 19/00, B02C 19/06, B02C 21/00, B02C 23/10, B02C 23/34, H01M 4/13, H01M 4/62, H01M 4/66, H01M 10/0525, B03B 9/06, C22B 7/00, H01M 4/04, H01M 10/54

(54) **VERFAHREN ZUM DIREKTRECYCLING VON ELEKTRODENMATERIALIEN AUS SCHROTTEN DER HERSTELLUNG VON LITHIUM-IONEN-BATTERIEN**
METHOD FOR THE DIRECT RECYCLING OF ELECTRODE MATERIALS FROM SCRAP USED FOR THE PRODUCTION OF LITHIUM-ION BATTERIES
PROCÉDÉ DE RECYCLAGE DIRECT DE MATÉRIAUX D'ÉLECTRODE À PARTIR DE DÉCHETS DE FABRICATION DE BATTERIES AU LITHIUM-ION

(30) Priorität: 12.01.2024 DE 102024000111
(43) Veröffentlichungstag der Anmeldung: 16.07.2025
(73) Patentinhaber: HOSOKAWA ALPINE Aktiengesellschaft, 86199 Augsburg (DE)
(72) Erfinder: Eisenbarth, Christian, 86609 Donauwörth (DE); Förster, Andreas, 86399 Bobingen (DE)

(56) Entgegenhaltungen:
- EP-B1- 2 975 686
- EP-B1- 3 940 872
- CN-A- 115 275 419

## Beschreibung

Die Erfindung betrifft ein Verfahren zum Direktrecycling von Elektrodenmaterialien aus Schrotten, die bei der Herstellung von Lithium-Ionen-Batterien anfallen, welche mechanisch beansprucht werden und als zerkleinerte entschichtete Elektrodenfolien und abgetrenntes Elektrodenbeschichtungsmaterial wieder für die Produktion bereitgestellt werden.

Die Grundkomponenten einer Lithium-Ionen-Batterie sind Anode, Kathode, Elektrolyt, und ein Separator. Bei der Herstellung von Lithium-Ionen-Batterien für die Elektromobilität fallen im Produktionsprozess große Abfall-/Ausschussmengen beschichteter Anoden- als auch Kathodenfolie an.

Die Kathode besteht aus einer Aluminiumfolie, die mit Aktivmaterialien, z.B. einer aus Lithium-Nickel-Mangan-Kobalt-Mischoxid (NMC), Lithiumeisenphosphat (LFP) oder anderen aktiven Kathodenmaterialien sowie Binder, Leit- und anderen Additiven beschichtet wird. Die Anode besteht aus einer Kupferfolie, die mit einer Mischung aus Graphit, teilweise Silizium, Binder, Leit- und anderen Additiven beschichtet wird.

Nach der Beschichtung und der nachfolgenden Kalandrierung der Elektroden entstehen durch Randbeschnitte, Aussortieren von Stellen mit Beschichtungsfehlern, Ausschuss durch Anfahr- und Abfahrprozesse, Fehlwicklungen usw. größere Mengen Schrotte von beschichteten Elektroden.

Bisher werden diese Elektrodenschrotte dem Batterierecycling von ausgedienten Batterien zugeführt. Dort können sie nicht sortenrein behandelt werden, so dass die Aktivmaterialien anschließend als Mischung, der sog. Schwarzmasse vorliegen. Die Aufbereitung der Schrotte erfolgt metallurgisch.

Da dieses Material wertvolle Bestandteile aufweist, die noch nicht weiter verbaut und verunreinigt sind, bietet es sich an, dieses bereits im Produktionsprozess abzuzweigen, aufzubereiten und die aufbereiteten Aktivmaterialien der Produktion wieder zuzuführen.

Erste Verfahren zur mechanischen Aufbereitung im Produktionsprozess sind bekannt.

Aus der EP 2 975 686 B1 ist bereits ein Verfahren zum Recycling von Kathodenmatherial aus der Produktion von Lithium-Ionen-Batterien bekannt, welches recyceltes Kathodenmaterial liefert, aus dem recycelte Kathoden für Lithium-Ionen-Batterien ohne weitere chemische oder physikalische Reinigungsschritte hergestellt werden können. Es wurde festgestellt, dass der Binder nicht aus dem recycelten Kathodenmatherial entfernt werden muss, um die Leitfähigkeitseigenschaften des recycelten Kathodenmaterials auf einem hohen Niveau zu halten. Bei der Behandlung wird vorzerkleinertes Kathodenausgangsmaterial in einer Prallmühle mit anschließender Filterung zur Entstaubung und Siebung aufbereitet und die Aluminiumfolie kann in einem Schritt mit einem Ausbringen von 99% recycelt werden. Als Prallmühle wird eine Hammermühle eingesetzt. Durch den Einsatz einer Hammermühle werden beide Partikelsorten aufgrund ihrer Eigenschaften mit genügend großem Unterschied in der Partikelgröße erhalten, sodass diese gut mittels Siebung getrennt werden können.

Ebenfalls ist das Recycling von Elektrodenschrotte aus der EP 3940872B1 bekannt. Auch hier erfolgt das Recycling aus dem Produktionsprozess heraus. Es werden die Abfälle recycelt, die beim Stanzen der positiven oder der negativen Elektrodenplatte anfallen. Das Verfahren umfasst (a) Trockenzerkleinern der Elektrodenschrotte einschließlich der Aktivmaterialschicht, (b) sequenzielles Sieben des Materials aus der Mühle mit mehreren Sieben, um das Aktivmaterial von den Fragmenten zu entfernen sowie ein Abtrennen der Aktivmaterialflocken der kleinsten Größe und einer größeren Größe, um das wiederverwendbare Produkt zu erhalten. Die Mühle kann eine Stiftmühle, eine Scheibenmühle, einen Schneidmühle oder eine Hammermühle sein. Das Aktivmaterial kann direkt ohne weitere Aufbereitung in den Produktionsprozess zurückgeführt werden.

Aus CN115275419 A ist ein diversifiziertes Rückgewinnungsverfahren für Abfallmaterialien negativer Elektroden von Lithium-Leistungsbatterien bekannt.

Der Erfindung liegt die Aufgabe zugrunde, dem Stand der Technik eine Alternative zur Verfügung zu stellen.

Der Erfindung liegt die Aufgabe zugrunde ein Verfahren zur Verfügung zu stellen, welches es ermöglicht, Elektrodenschrotte aus der LIB-Produktion zu recyclen, ohne die Aktivmaterialen negativ zu verändern, damit dieses der Produktion direkt wieder zugeführt werden kann. Des Weiteren ist es Aufgabe der Erfindung ein Verfahren zur Verfügung zu stellen, welches für das mechanische Beanspruchen von Elektrodenschrotte und das Abtrennen der Elektrodenfolien von den Elektrodenbeschichtungsmaterialien optimiert ist.

Bei einem Verfahren der eingangs beschriebener Art wird die Aufgabe erfindungsgemäß durch den kennzeichnenden Teil des Hauptanspruchs gelöst.

Bei dem erfindungsgemäßen Verfahren werden die Elektrodenschrotte einer mechanischen Beanspruchung zugeführt, wobei sie zunächst zu Schüttgut vorzerkleinert werden und mechanisches Beanspruchen der vorzerkleinerten Elektrodenschrotte in konditionierter Atmosphäre in einer Fließbettgegenstrahlmühle erfolgt. Dabei wird das Elektrodenbeschichtungsmaterial mechanisch von den Elektrodenfolien, den Stromsammlerfolien getrennt und sortenrein dem Produktionsprozess von Lithium-Ionen-Batterien wieder zugeführt wird.

Die in den Beschichtungsmaterialmischungen enthaltenen Binder führen nicht nur zu einer Kohäsion der Aktivmaterial-Partikel, sondern auch zur Adhäsion der Kathoden- und Anoden-Beschichtungen auf der jeweiligen Metallfolie. Bei der Aufbereitung der beschichteten Metallfolien kommt es nun darauf an, diese Adhäsion so gut wie möglich aufzuheben und so die Beschichtungen von den Metallfolien zu trennen. In einem weiteren Schritt können die Beschichtungsmaterialien dann von den entschichteten Metallfolien separiert werden.

Die Haftkraft des Beschichtungsmaterials hängt maßgeblich von dem Bindertyp/- system ab.

Die aufzubereitenden Elektrodenschrotte werden zunächst vorzerkleinert, um das Produkt in einen transport- und dosierfähigen Zustand zu bringen. Dies erfolgt bevorzugt auf einer Schneidmühle, alternativ auf einem Schredder.

Im nachfolgenden Schritt wird das Produkt auf einer Strahlmühle im Fließbett im Batchverfahren behandelt.

Die Strahlmühle wird bei diesem Verfahren nicht als Zerkleinerungstechnik für Feinstpulver, ihrem ursprünglichen Verwendungszweck, eingesetzt, sondern es wird die im Fließbett vorhandene Bewegung, hervorgerufen durch den Eintrag von Gasströmen durch die Mahldüsen, zum Abreiben der Beschichtung und den vorhandenen Sichter als Rückhalt der Elektrodenfolienfragmente.

Die Fließbettstrahlmühle wird dafür bei niedrigen Mahldrücken gefahren. Der Mahldruck liegt bevorzugt unter dem Mahldruck von 8 bar, der für eine Feinstzerkleinerung üblich ist. Bevorzugt liegt er bei unter 6 bar oder 4 bar und besonders bevorzugt unter 2 bar.

Der Mahldruck und die Verweilzeit des Materials in der Mühle werden so eingestellt, dass das Verfahren ein verschleißfreies Entschichtungsverfahren darstellt.

Durch die im Fließbett vorhandene Bewegung reibt sich das Beschichtungsmaterial von der Folienfragmenten ab, wobei die Beschichtung selbst zerkleinert wird, ohne aber die Folie zu zerkleinern. Diese Art der Beanspruchung ist vorteilhaft, da es sich bei dem Metallfolien um schleißende Materialien handelt. Aus Gründen des Explosionsschutzes ist Metallstaub unerwünscht. Nach einer definierten Verweilzeit des Produkts in der Mühle wird die entschichtete Metallfolie über den Mühlensumpf entleert und es wird frisches Material in die Mühle gefüllt.

Das Aktivmaterial wird kontinuierlich über das Sichtrad als Feingut aus der Strahlmühle abgezogen. Es wird eine sortenreine Fraktion mit sehr hohem Reinheitsgrad erhalten, die wieder in den ursprünglichen Produktionsprozess überführt werden kann. Idealerweise erfolgt die Beanspruchung so, dass das Aktivmaterial in einer Körnung vorliegt, die der Körnung der Komponenten in der Produktion entsprechen.

Im Vergleich zu anderen Verfahren entfällt hier die Separation der beiden Fraktionen in einem separaten Schritt z.B. als Siebung, da dieser in die mit Sichtrad ausgerüstete Fließbettgegenstrahlmühle vorverlegt ist.

Das Elektrodenbeschichtungsmaterial ist sehr empfindlich gegenüber Feuchte. Durch Feuchte kommt es zu einer Degradation des Aktivmaterials, sodass es für ein Recycling nicht mehr geeignet ist. Deshalb erfolgt die Beanspruchung in der Fließbettgegenstrahlmühle in einer konditionierten Atmosphäre.

Das Verfahren wird in einer Anlage, welche eine Vorzerkleinerung und eine Beanspruchung in einer Strahlmühle umfasst in konditionierter Atmosphäre durchgeführt. Die konditionierte Atmosphäre weist beispielsweise einen Taupunkt von mindestens minus 50°C.

Es kann trockene Luft oder Inertgas eingesetzt werden. Es kommt vorzugsweise Stickstoff zum Einsatz. So kann dem Explosionsschutz durch mögliche Aluminiumstäube aus den Metallfolien Rechnung getragen werden.

Außerdem sind Bestandteile der Elektrodenschrotte gesundheitsgefährliche Stoffe. Die Fahrweise in Stickstoff-Atmosphäre in einem geschlossenen System (close loop) dient somit dem Produktschutz, dem Ex-Schutz und dem Gesundheits- und Umweltschutz.

In einer weiteren Ausführungsvariante der Erfindung wird die Vorzerkleinerung in trockener Atmosphäre durchgeführt, während die mechanische Beanspruchung in der Fließbettgegenstrahlmühle wahlweise in trockener Luftatmosphäre oder in Inertgasatmosphäre durchgeführt wird.

In einer anderen Ausführungsvariante der Erfindung wird das Verfahren durch Betreiben der Fließbettgegenstrahlmühle in Heißgasfahrweise weiter optimiert. Bei hohen Temperaturen erweicht der Binder und die Haftkraft zwischen den Beschichtungspartikeln als auch zwischen Beschichtung und Metallfolie wird heruntergesetzt, sodass geringere Beanspruchungsenergien erforderlich sind.

Es werden Temperaturen im Bereich der Erweichungstemperatur des Binders eingestellt. Bevorzugt wird die Temperatur des Mahlgases so angepasst, dass in der Strahlmühle die besten Bedingungen für die Ablösung des Beschichtungsmaterials bestehen, z.B. durch eine Temperaturerhöhung bis unterhalb der Zersetzungstemperatur des Binders.

Bei diesem Verfahren zum Direktrecycling von Elektroden gilt das Hauptaugenmerk der Aufbereitung der Kathodenfolie, weil z. B. das NMC-Gemisch das werthaltgiste Material ist. Die Aufbereitung hierfür muss unter getrockneter Luftatmosphäre stattfinden, da das Beschichtungsmaterial sehr feuchteempfindlich ist und es darf möglichst kein Materialabrieb der Aluminiumfolie stattfinden. Des Weiteren handelt es sich um schleißendes und explosionsfähiges (Aluminiumpulver) Material.

Das wiedergewonnene Beschichtungsmaterial, ist in den Eigenschaften, insbesondere der Körnung, den Stoffströme des Produktionsprozesses anzupassen, damit möglichst weitere Aufbereitungsschritte entfallen und das Beschichtungsmaterial aus der Strahlmühle direkt in die Produktion zugeführt werden kann.

Das Verfahren ist aber auch geeignet Anodenfolien zu recyclen.

Das Verfahren kann auch für Kathodenfolien von All-Solid-State-Batterien eingesetzt werden.

Die Erfindung ist nicht auf die dargestellte Anzahl der jeweiligen Behandlungsschritte beschränkt. Es bedarf auch nicht der linearen Führung der Produktströme, hier können auch Rückführungen vorgesehen sein u. dgl. mehr.

Weitere Einzelheiten, Merkmale und Vorteile des erfindungsgemäßen Verfahrens ergeben sich aus den Unteransprüchen sowie aus der nachfolgenden Beschreibung der zugehörigen Figuren, in der -beispielhaft- ein bevorzugtes Ausführungsbeispiel der Erfindung dargestellt ist. Die Figuren zeigen:

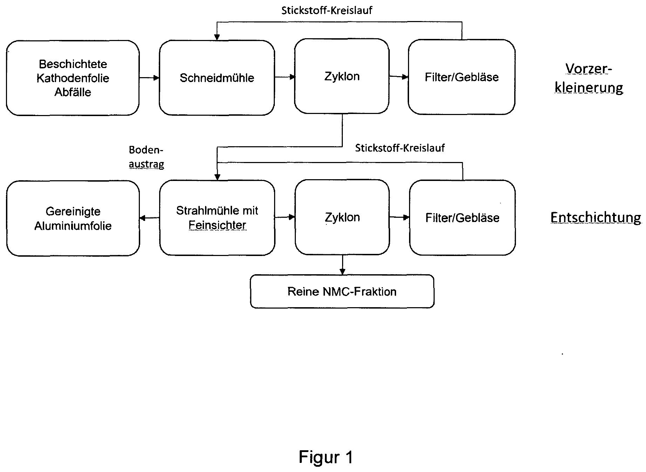

Fig. 1 ein Schema des erfindungsgemäßen Verfahrens mit seinen Schritten für das Recycling der Kathodenfolie

In Figur 1 ist das Verfahren mit seinen Schritten in einem Fließbild für das Beispiel Recycling von beschichteten Kathodenfolien-Abfällen dargestellt.

Die in der Produktion von Kathoden anfallenden Abfälle bei der Herstellung von Lithium-Ionen-Batterien sind Ausgangsstoff für das erfindungsgemäße Verfahren.

In einer Vorzerkleinerung unter Stickstoffatmosphäre werden die beschichteten Kathodenfolien in ein Schüttgut überführt. Die beschichteten Kathodenfolien werden dafür in einer Schneidemühle zerkleinert und in einem Zyklon vom Stickstoffkreislauf getrennt. Der nachfolgende Filter dient der Entstaubung und das Gebläse der Aufrechterhaltung des Stickstoffkreislaufes. Die zerkleinerten Kathodenfolien aus dem Zyklon werden für die Entschichtung einer Strahlmühle, hier einer Fließbettgegenstrahlmühle, unter Stickstoffatmosphäre zugeführt. In der Fließbettgegenstrahlmühle werden die Kathodenfolienfragmente im Fließbett beansprucht, aber nicht zerkleinert, dadurch wird das Beschichtungsmaterial von der Metallfolie abgerieben. Das Beschichtungsmaterial kann dabei weiter zerkleinert werden. Das leichtere und feinere Beschichtungsmaterial wird über das Sichtrad und den Feingutaustrag kontinuierlich abgezogen und zum Abtrennen des reinen Beschichtungsmaterials, vom Gasstrom einem Zyklon zugeführt. Es stellt die reine NMC-Fraktion dar. Über die Drehzahl des Sichtrades und den Gasvolumenstrom kann die Partikelgröße des Beschichtungsmaterials eingestellt werden. Die reine NMC-Fraktion kann nun der Kathodenproduktion für die Lithium-Ionen-Batterie-Herstellung wieder zugeführt werden. Die gröbere schwerere Metallfolienfraktion wird über den Sumpf als gereinigte Aluminiumfolie aus der Fließbettgegenstrahlmühle abgezogen. Die Strahlmühle wird im Batchbetrieb gefahren. Der Stickstoffstrom wird im Filter vom Staub befreit und mittels Gebläse in der Entschichtung im Kreislauf geführt.

Die Parameter der Mahlung und Sichtung werden derart eingestellt, dass das aus der Fließbettgegenstrahlmühle abgezogene Feingut, das Beschichtungsmaterial, möglichst vollständig und in seinen Eigenschaften, insbesondere in seiner Körnung, der für den Produktionsprozess notwendigen Körnung entspricht.

## Patentansprüche

1. Verfahren zum Direktrecycling von Elektrodenschrotte, anfallend als Produktionsabfall bei der Produktion von Lithium-Ionen-Batterien, umfassend die Schritte:
- Bereitstellen von Elektrodenschrotten umfassend Elektrodenfolie, Elektrodenbeschichtungsmaterial und Binder,
- mechanisches Beanspruchen der Elektrodenschrotte,
- Austragen des beanspruchten Materials aus der mechanischen Beanspruchung als:
- zerkleinerte entschichtete Elektrodenfolien,
- abgetrenntes Elektrodenbeschichtungsmaterial,
wobei
- das mechanische Beanspruchen der Elektrodenschrotte umfasst:
- Vorzerkleinern der Elektrodenschrotte zu Schüttgut und
- mechanisches Beanspruchen der vorzerkleinerten Elektrodenschrotte in konditionierter Atmosphäre in einer Fließbettgegenstrahlmühle.

2. Verfahren nach Anspruch 1, **dadurch gekennzeichnet, dass** die Fließbettgegenstrahlmühle im Batchverfahren betrieben wird.

3. Verfahren nach Anspruch 1 und 2, **dadurch gekennzeichnet, dass** das Vorzerkleinern in einer Schneidmühle erfolgt.

4. Verfahren nach Anspruch 1 bis 3, **dadurch gekennzeichnet, dass** das Vorzerkleinern in konditionierter Atmosphäre erfolgt.

5. Verfahren nach Anspruch 4, **dadurch gekennzeichnet, dass** die konditionierte Atmosphäre eine trockene Luftatmosphäre ist.

6. Verfahren nach Anspruch 5, **dadurch gekennzeichnet, dass** die konditionierte Atmosphäre eine trockene Inertgasatmosphäre ist, bevorzugt eine Stickstoffatmosphäre ist.

7. Verfahren nach einem der vorhergehenden Ansprüche, **dadurch gekennzeichnet, dass**
das Verfahren in einem geschlossenen System durchgeführt wird.

8. Verfahren nach einem der vorhergehenden Ansprüche, **dadurch gekennzeichnet, dass**
das Verfahren in einem geschlossenen System unter konditionierter Atmosphäre einem Produktschutz, einem Explosionsschutz, einem Gesundheitsschutz und / oder einem Umweltschutz dient.

9. Verfahren nach einem der vorhergehenden Ansprüche, **dadurch gekennzeichnet, dass**
eine Intensität der Beanspruchung in der Fleißbettgegenstrahlmühle durch einen Mahldruck von Mahldüsen und einer Verweilzeit des Materials in der Mühle eingestellt wird.

10. Verfahren nach einem der vorhergehenden Ansprüche, **dadurch gekennzeichnet, dass**
eine Körnung des abgetrennten Beschichtungsmaterials über Betriebsparameter eines Sichtrades der Fließbettgegenstrahlmühle eingestellt wird.

11. Verfahren nach einem der vorhergehenden Ansprüche, **dadurch gekennzeichnet, dass**
die Fließbettgegenstrahlmühle in Heißgasfahrweise betrieben wird.

12. Verfahren nach einem der vorhergehenden Ansprüche, **dadurch gekennzeichnet, dass**
durch heiße Temperaturen bei der Heißgasfahrweise der Fließbettgegenstrahlmühle eine Kohäsion zwischen Aktivmaterial-Partikeln und eine Kohäsion zwischen Aktivmaterial-Partikeln und Metallfolie hervorgerufen durch den Binders verringert.

13. Verfahren nach einem der vorhergehenden Ansprüche, **dadurch gekennzeichnet, dass**
die Elektrodenschrotte Kathodenfolien sind.

## Claims

1. Process for the direct recycling of electrode scrap resulting from the production of lithium-ion batteries, comprising the steps:
- Provision of electrode scrap comprising electrode foil, electrode coating material and binder,
- Mechanical stressing of the electrode scrap,
- Removal of the stressed material resulting from the mechanical stress as:
- comminuted, stripped electrode foils,
- separated electrode coating material,
- **wherein** the mechanical stress of the electrode scrap step includes:
- pre-chrushed of the electrode scrap to bulk material and
- the mechanical stressing of the pre-crushed electrode scraps takes place in a conditioned atmosphere in a fluidised bed opposed jet mill.

2. Process in accordance with Claim 1, **characterised in that**
the fluidised bed opposed jet mill is operated in batch mode.

3. Process in accordance with Claims 1 and 2, **characterised in that**
a granulator is used for the pre-crushing.

4. Process in accordance with Claims 1 to 3, **characterised in that**
the pre-crushing step takes place in a conditioned atmosphere.

5. Process in accordance with Claim 4, **characterised in that**
the conditioned atmosphere is a dry air atmosphere.

6. Process in accordance with Claim 5, **characterised in that**
the conditioned atmosphere is a dry inert gas atmosphere, preferably a nitrogen atmosphere.

7. Process in accordance with one or more of the preceding claims, **characterised in that**
the process is performed in a closed system.

8. Process in accordance with one or more of the preceding claims, **characterised in that**
the process is performed in a closed system under a conditioned atmosphere, which serves not only a product protection but also an explosion protection and a health and/or an environmental protection.

9. Process according to one of the preceding claims, **characterised in that**
an intensity of the stress in the fluidised bed opposed jet mill is adjusted by a grinding pressure of grinding nozzles and a residence time of the material in the mill.

10. Process according to one of the preceding claims, **characterised in that**
a particle size of the separated coating material is adjusted as a function of the operating parameters of a classifying wheel in the fluidised bed opposed jet mill.

11. Process in accordance with one of the preceding claims, **characterised in that**
the fluidised bed opposed jet mill is operated in hot gas mode.

12. Process according to one of the preceding claims, **characterised in that**
due to hot temperatures of the hot gas mode of the fluidised bed opposed jet mill, a cohesion between active material particles as well as a cohesion between active material particles and metal foil generated by the binder are reduced.

13. Process in accordance with one of the preceding claims, **characterised in that** the electrode scraps are cathode foils.

## Revendications

1. Procédé pour le recyclage direct de déchets d'électrodes s'étant produits sous forme de déchets de production lors de la fabrication des batteries lithium-ion, comprenant les pas suivants :
- la mise à disposition des déchets d'électrodes se composant de films d'électrodes, de matériaux de revêtement d'électrodes et de liants,
- les sollicitations mécaniques des déchets d'électrodes,
- l'évacuation des matériaux soumis à des sollicitations mécaniques, présentés sous forme de :
- films d'électrodes broyés et enlevés du couchage,
- matériau de couchage d'électrodes séparé,
**selon lequel**
- la sollicitation mécanique des déchets d'électrodes comprend :
- le prébroyage des déchets d'électrodes pour obtenir de la matière en vrac et
- le traitement mécanique des déchets d'électrodes prébroyés sous une atmosphère conditionnée dans un broyeur à jets opposés à lit fluidisé.

2. Procédé suivant la revendication 1, **caractérisé par le fait que** le broyeur à jets opposés à lit fluidisé fonctionne en mode batch.

3. Procédé suivant les revendications 1 et 2, **caractérisé par le fait que** le prébroyage est réalisé dans un broyeur à couteaux.

4. Procédé suivant les revendications 1 à 3, **caractérisé par le fait que** le prébroyage est réalisé sous une atmosphère conditionnée.

5. Procédé suivant la revendication 4, **caractérisé par le fait que** l'atmosphère conditionnée est une atmosphère d'air sèche.

6. Procédé suivant la revendication 5, **caractérisé par le fait que** l'atmosphère conditionnée est une atmosphère de gaz inerte sèche, de préférence une atmosphère d'azote.

7. Procédé suivant une des revendications précédentes, **caractérisé par le fait que** le procédé fonctionne dans un système fermé.

8. Procédé suivant une des revendications précédentes, **caractérisé par le fait que** le procédé fonctionnant dans un système fermé sous une atmosphère conditionnée sert à une protection de produit, une protection d'explosion, une protection de santé et/ou une protection d'environnement.

9. Procédé suivant une des revendications précédentes, **caractérisé par le fait qu'une**
intensité de la sollicitation au broyeur à jets opposés à lit fluidisé est réglée par une pression de broyage des buses de broyage et un temps d'exposition du produit au broyeur.

10. Procédé suivant une des revendications précédentes, **caractérisé par le fait qu'une**
granularité du matériau de couchage séparé est réglée par les paramètres opérationnels d'un rotor séparateur du broyeur à jets opposés à lit fluidisé.

11. Procédé suivant une des revendications précédentes, **caractérisé par le fait que** le broyeur à jets opposés à lit fluidisé fonctionne en mode de gaz chaud.

12. Procédé suivant une des revendications précédentes, **caractérisé par le fait que** les températures chaudes au mode de gaz chaud du broyeur à jets opposés à lit fluidisé réduisent une cohésion entre les particules du matériau actif et une cohésion entre les particules du matériau actif et le film de métal causée par le liant.

13. Procédé suivant une des revendications précédentes, **caractérisé par le fait que** les déchets d'électrodes sont des films de cathode.
